(19) Europäisches Patentamt
European Patent Office
Office européen des brevets

(11) **EP 2 696 224 A2**

(12) **EUROPEAN PATENT APPLICATION**

(43) Date of publication:
**12.02.2014 Bulletin 2014/07**

(51) Int Cl.:
**G02B 5/02** *(2006.01)*    **G02B 1/11** *(2006.01)*

(21) Application number: **13174283.5**

(22) Date of filing: **28.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.06.2012 JP 2012146167**
**27.12.2012 JP 2012286385**

(71) Applicant: **Nitto Denko Corporation**
**Osaka 567-8680 (JP)**

(72) Inventors:
• **Kishi, Atsushi**
**Osaka, 567-8680 (JP)**
• **Ninomiya, Masaki**
**Osaka, 567-8680 (JP)**
• **Hashimoto, Naoki**
**Osaka, 567-8680 (JP)**
• **Kuramoto, Hiroki**
**Osaka, 567-8680 (JP)**
• **Takemoto, Hiroyuki**
**Osaka, 567-8680 (JP)**

(74) Representative: **HOFFMANN EITLE**
**Patent- und Rechtsanwälte**
**Arabellastrasse 4**
**81925 München (DE)**

(54) **Image display, anti-glare film, and method for producing anti-glare film**

(57)    An image display having superior anti-glare properties, less glare, and a small reduction in contrast even though surface asperities of an anti-glare film are easily formed by filler flocculation. The image display is an image display including an anti-glare film 10 at a visible side surface; and a black matrix pattern 15, wherein the anti-glare film 10 includes: a translucent base; and an anti-glare layer being laminated on at least one surface of the translucent base, the anti-glare layer is formed of an anti-glare layer-forming material containing a resin and fillers, the anti-glare layer includes a flocculated portion 14 forming a convex portion on a surface of the anti-glare layer by flocculation of the fillers, in the flocculated portion 14, the fillers are present in the state of being gathered in one direction in an in-plane direction of the anti-glare layer, and the anti-glare film 10 is placed so that the one direction in which the fillers are gathered coincides with a longitudinal direction of the black matrix pattern 15.

FIG. 1A

EP 2 696 224 A2

**Description**

Technical Field

The present invention relates to an image display, an anti-glare film, and a method for producing an anti-glare film.

Background Art

Various image displays such as a cathode ray tube display (CRT), a liquid crystal display (LCD), a plasma display panel (PDP), and an electroluminescence display (ELD) are subjected to an anti-glare treatment for preventing a reduction in contrast due to reflection of external light such as light from fluorescent lamp and sunlight and reflected glare of image on the surfaces of the image displays. Specifically, accompanying the increase in screen size of image displays, the number of image displays including anti-glare films is increased.

Recently, the number of high-definition image displays having small pixel sizes for improving image quality has been increased. Placing a conventional anti-glare film in such high-definition image display may cause a failure (failure due to glare) of visually enhancing a variation of brightness present in pixels, resulting in reduction in image quality. Therefore, in order to prevent the glare, various proposals have been made.

For example, it has been proposed that occurrence of flicker (glare) caused by the interference of a display with pixels is suppressed by the use of a film obtained by forming a transparent support so as to have asperities each with an aspect ratio in a predetermined range (e.g., see Patent Document 1).

Moreover, it has been proposed that occurrence of scintillation (glare) is suppressed without reducing a contrast by causing scattering anisotropy to be exerted by a transparent dispersion material formed in an anisotropic shape in an anti-glare film including an inner scattering layer composed of a transparent matrix and the transparent dispersion material (e.g., see Patent Document 2). In the Patent Document 2, the dispersion material is formed in an anisotropic shape by adding an electric field to the dispersion material.

Prior Art Documents

Patent Documents

Patent Document 1: JP 2009-109683 A
Patent Document 2: JP 2003-202416 A

Summary of Invention

Problem to be Solved by the Invention

However, the elimination of glare by the technologies disclosed in the Patent Documents 1 and 2 has not been sufficient. Furthermore, in the technologies, the number of production steps has been increased, and thus, productivity has not been sufficient.

The present invention is intended to provide an image display having improved visibility without reducing display characteristics of the image display such as any of various kinds of LCDs which depend on definition or the like even though surface asperities of an anti-glare film are easily formed by filler flocculation. That is, the present invention is intended to provide an image display having superior anti-glare properties, less glare, and a small reduction in contrast. The present invention can also provide an anti-glare film used to produce an image display having superior anti-glare properties, less glare, and a small reduction in contrast. The present invention is intended to also provide a method for productively producing an anti-glare film.

In order to achieve the aforementioned object, the image display according to the present invention is an image display including: an anti-glare film at a visible side surface; and a black matrix pattern, wherein the anti-glare film includes: a translucent base; and an anti-glare layer being laminated on at least one surface of the translucent base, the anti-glare layer is formed of an anti-glare layer-forming material containing a resin and fillers, the anti-glare layer includes a flocculated portion forming a convex portion on a surface of the anti-glare layer by flocculation of the fillers, in the flocculated portion, the fillers are present in the state of being gathered in one direction in an in-plane direction of the anti-glare layer, and the anti-glare film is placed so that the one direction in which the fillers are gathered coincides with a longitudinal direction of the black matrix pattern.

The anti-glare film according to the present invention is an anti-glare film including: a translucent base; and an anti-glare layer being laminated on at least one surface of the translucent base, wherein the anti-glare layer is formed of an anti-glare layer-forming material containing a resin and fillers, the anti-glare layer includes a flocculated portion forming a convex portion on a surface of the anti-glare layer by flocculation of the fillers, and in the flocculated portion, the fillers are present in the state of being gathered in one direction in an in-plane direction of the anti-glare layer.

The method for producing an anti-glare film according to the present invention is a method for producing the anti-glare film according to the present invention, including the steps of: coating the anti-glare layer-forming material on at least one surface of the translucent base to form a coating layer of the anti-glare layer-forming material; and curing the coating layer to form an anti-glare layer, the anti-glare layer comprises a flocculated portion forming a convex portion on a surface of the anti-glare layer by flocculation of the fillers, and in the flocculated portion, the fillers are present in the state of being gathered in one direction in an in-plane direction of the anti-glare layer, wherein a surface profile of the anti-glare film is adjusted by adjusting a shear distance S of the coating layer, defined by the following equation (I):

$$S = \int V dt \qquad (I)$$

where in the equation (I)

S: shear distance (m)
V: shear velocity (m/s)
t: shear holding time (s), and

the shear velocity V is defined by the following equation (II):

$$V = kah^2/\eta \qquad (II)$$

where in the equation (II)

k: specific gravity of coating layer (kg/m$^3$)
a: acceleration (m/s$^2$)
h: thickness of coating layer (m)
$\eta$: viscosity of coating layer (Pa•s)

provided that the acceleration a may change over time or may be constant.

Effects of the Invention

According to the image display of the present invention, an image display having superior anti-glare properties, less glare, and a small reduction in contrast can be provided even though surface asperities of an anti-glare film are easily formed by filler flocculation. According to the present invention, an anti-glare film used to produce an image display having superior anti-glare properties, less glare, and a small reduction in contrast can also be provided. According to the present invention, a method for producing an anti-glare film with superior productivity also can be provided.

Brief Description of Drawings

[FIG. 1] FIGs. 1A and 1B are views each illustrating placement of an anti-glare film and a black matrix pattern in the image display according to the present invention.
[FIG. 2] FIG. 2 is a schematic view illustrating the definition of the height of a convex portion.
[FIG. 3] FIG. 3 is a schematic view showing a configuration of an example of the anti-glare film according to the present invention.
[FIG. 4] FIG 4 shows a diagram schematically illustrating an assumable mechanism in relation to flocculation of particles in the anti-glare film according to the present invention.
[FIG. 5] FIGs. 5A and 5B are schematic views illustrating an example of the definitions of the thickness direction and the in-plane direction of the anti-glare layer in the anti-glare film according to the present invention.
[FIG. 6] FIG. 6 is a diagram schematically illustrating an assumable mechanism in relation to flocculation of particles in the case where a permeable layer is formed in the anti-glare film according to the present invention.

[FIG. 7] FIG. 7A is a schematic view showing an example of the method for producing an anti-glare film in the present invention. FIG. 7B is a schematic view showing another example of the method for producing an anti-glare film in the present invention.

[FIG. 8] FIG. 8 is a schematic view illustrating a method for calculating the shear velocity V of a coating layer.

[FIG. 9] FIG. 9 is a schematic view showing an example of the case where the shear velocity V changes depending on the shear holding time t.

[FIG. 10] FIG. 10 is a schematic view showing the relationship between the Ti value of a coating solution and an assumable distribution of thixotropy-imparting agents.

[FIG. 11] FIG. 11 is a graph schematically showing an example of the surface profile control of the anti-glare film by the shear distance and the number of parts by weight of particles in the method for producing an anti-glare film according to the present invention.

Description of Embodiment

In the image display according to the present invention, it is preferred that the fillers contain at least one selected from particles and thixotropy-imparting agents (thixotropic agents).

In the image display according to the present invention, it is preferred that the thixotropy-imparting agents are at least one selected from the group consisting of organoclay, oxidized polyolefin, and denatured urea.

In the image display according to the present invention, it is preferred that the anti-glare layer contains 0.2 to 5 parts by weight of the thixotropy-imparting agents with respect to 100 parts by weight of the resin.

In the image display according to the present invention, the anti-glare layer contains, with respect to 100 parts by weight of the resin, preferably 0.2 to 12 parts by weight of and more preferably 0.5 to 12 parts by weight of the particles.

It is preferred that the anti-glare film according to the present invention is an anti-glare film for use in the image display according to the present invention.

In the method for producing an anti-glare film according to the present invention, the shear distance S is preferably set in the range from $0.005 \times 10^{-9}$ to $120 \times 10^{-9}$ m.

In the method for producing an anti-glare film according to the present invention, the shear velocity V is preferably set in the range from $0.05 \times 10^{-9}$ to $2.0 \times 10^{-9}$ m/s.

In the method for producing an anti-glare film according to the present invention, the shear holding time is preferably set in the range from 0.1 to 60 s.

In the method for producing an anti-glare film according to the present invention, it is preferred that the surface profile of the anti-glare film is adjusted by adjusting the number of parts by weight of the particles with respect to 100 parts by weight of the resin in the anti-glare layer-forming material.

Next, the present invention is described in detail. The present invention, however, is not limited by the following description.

The image display according to the present invention is an image display including: an anti-glare film at a visible side surface; and a black matrix pattern having longitudinal sides, such as a plurality of rectangles, wherein the anti-glare film includes: a translucent base; and an anti-glare layer being laminated on at least one surface of the translucent base, the anti-glare layer is formed of an anti-glare layer-forming material containing a resin and fillers, the anti-glare layer includes a flocculated portion forming a convex portion on a surface of the anti-glare layer by flocculation of the fillers, in the flocculated portion, the fillers are present in the state of being gathered in one direction in an in-plane direction of the anti-glare layer, and the anti-glare film is placed so that the one direction in which the fillers are gathered coincides with a longitudinal direction of the black matrix pattern.

It has been considered that glare is caused by a "lens effect" typified in the Patent Document 2. However, according to the assumption by the inventors of the present invention and the like, the glare is related to "moire topography" utilizing the variations of light and shade generated in specific asperities (of an anti-glare film) by a regular pattern. It is also assumed that a black matrix of a liquid crystal display has an anisotropic pattern. Hence the inventors of the present invention assumed that if an anti-glare film having anisotropic asperities can be formed, there is a direction of placing the anti-glare film in which the variations of light and shade utilized in moire topography are not generated and reached the present invention. The present invention, however, is not at all limited by these assumptions.

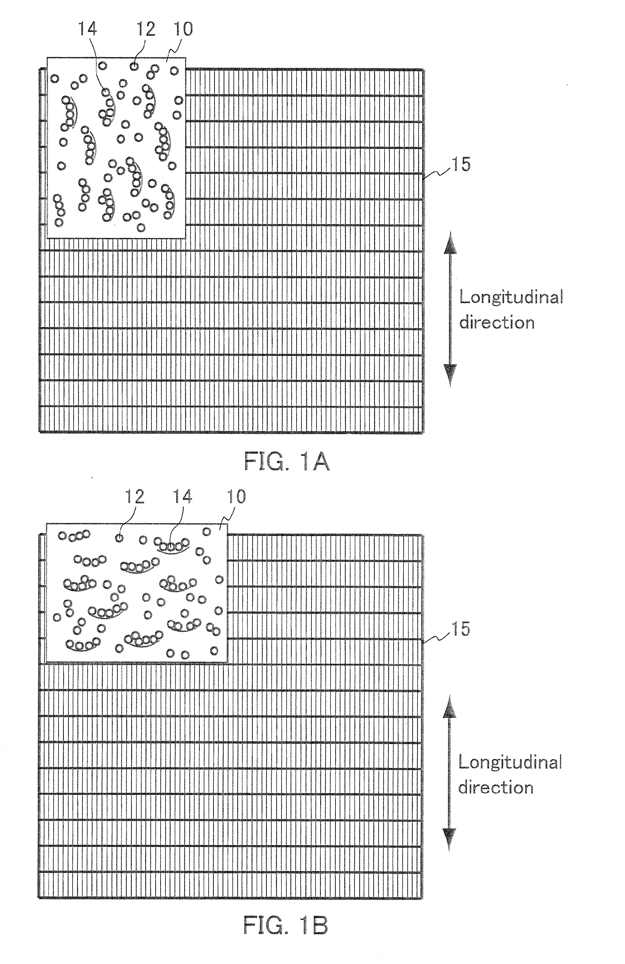

FIGs. 1A and 1B are views each illustrating placement of an anti-glare film 10 and a black matrix pattern 15 in the image display according to the present invention. The anti-glare film 10 in the present invention includes particles 12 as the fillers. The particles 12 are flocculated to form flocculated portions 14. As shown in FIGs. 1A and 1B, in each of the flocculated portions 14, the particles 12 are flocculated so that the particles are aligned in a specific one direction (longitudinal direction in FIG. 1A). The black matrix pattern 15 includes a plurality of rectangles and is placed so that the longitudinal direction of the black matrix pattern 15 coincides with the one direction.

The anti-glare film includes flocculated portions obtained by flocculating particles, so that asperities of the anti-glare film become asperities with gradual convex portions, and the average convex-to-convex distance Sm (mm) described below on the surface of the anti-glare film is increased, for example. An anti-glare film having such surface profile can effectively prevent reflected glare of light from a fluorescent lamp and the like. It has been generally considered that such surface profile works against glare. However, the inventors of the present invention found that glare can be less by placing the anti-glare film in an image display in a specific direction and obtain the present invention.

In contrast, FIG. 1B shows that glare is increased when the longitudinal direction of the black matrix pattern 15 does not coincide with a direction in which particles 12 are flocculated in the flocculated portions 14, compared with FIG. 1A.

The translucent base is not particularly limited and can be, for example, a transparent plastic film. The transparent plastic film base is not particularly limited and preferably has superior light transmittance of visible light (preferably 90% or more of light transmittance) and superior transparency (preferably 1% or less of haze value), and examples thereof include transparent plastic film bases described in JP 2008-90263 A. As the transparent plastic film base, a base having optically low birefringence is preferably used. The anti-glare film according to the present invention can be used as a protective film in a polarizing plate, for example. In this case, the transparent plastic film base preferably is a film formed of triacetylcellulose (TAC), polycarbonate, an acrylic polymer, polyolefin having a cyclic structure or a norbornene structure, or the like. In the present invention, the transparent plastic film base may be a polarizer itself as mentioned below. With such configuration, it is not necessary to include a protective layer formed of TAC or the like, so that the structure of the polarizing plate can be simplified. Thus, the number of steps of producing the polarizing plate or an image display can be reduced, so that production efficiency can be improved. Further, with such configuration, the polarizing plate can be thinner. In the case where the transparent plastic film base is a polarizer, the anti-glare layer serves as a conventional protective layer. Furthermore, with such configuration, the anti-glare film functions also as a cover plate in the case where the anti-glare film is attached to the surface of the liquid crystal cell, for example.

The thickness of the transparent plastic film base in the present invention is not particularly limited and is, for example, preferably in the range from 10 to 500 $\mu$m, more preferably from 20 to 300 $\mu$m, optimally from 30 to 200 $\mu$m from the viewpoint of strength, workability such as handleability and film thinness, for example. The refractive index of the transparent plastic film base is not particularly limited and is, for example, in the range from 1.30 to 1.80, preferably from 1.40 to 1.70.

The anti-glare layer can be formed by coating a coating solution containing the resin, the fillers, and a solvent to at least one surface of the translucent base to form a coating layer and then removing the solvent from the coating layer, for example. Examples of the resin include a heat-curable resin and an ionizing radiation-curable resin cured by ultraviolet and/or light. As the resin, a commercially available heat-curable resin and/or an ultraviolet-curable resin can also be used.

As the heat-curable resin and/or the ultraviolet-curable resin, a curable compound having at least one of an acrylate group and a methacrylate group cured by, for example, heat, light (ultraviolet or the like) and/or an electron beam can be used, and examples thereof include a silicone resin, a polyester resin, a polyether resin, an epoxy resin, an urethane resin, an alkyd resin, a spiroacetal resin, a polybutadiene resin, a polythiol polyene resin, and an oligomer and/or a prepolymer of acrylate and/or methacrylate of a polyfunctional compound such as a polyhydric alcohol. They may be used alone or in a combination of two or more of them.

In the resin, a reactive diluent having at least one of an acrylate group and a methacrylate group can be used, for example. As the reactive diluent, any of reactive diluents described in JP 2008-88309 A can be used, for example, and examples thereof include monofunctional acrylate, monofunctional methacrylate, polyfunctional acrylate, and polyfunctional methacrylate. As the reactive diluent, acrylate having a trifunctional group or more or methacrylate having a trifunctional group or more is preferable because the hardness of the anti-glare layer can be superior. Examples of the reactive diluent also include butanediol glycerin ether diacrylate, acrylate of isocyanuric acid, and methacrylate of isocyanuric acid. They may be used alone or in a combination of two or more of them.

The main function of the particles for forming the anti-glare layer is to impart anti-glare properties by forming surface asperities of the anti-glare layer and control the haze value of the anti-glare layer. The haze value of the anti-glare layer can be designed by controlling the difference in refractive index between the particles and the resin. Examples of the particles include inorganic particles and organic particles. The inorganic particles are not particularly limited, and examples thereof include silicon oxide particles, titanium oxide particles, aluminium oxide particles, zinc oxide particles, tin oxide particles, calcium carbonate particles, barium sulfate particles, talc particles, kaolin particles, and calcium sulfate particles. The organic particles are not particularly limited, and examples thereof include a polymethyl methacrylate resin powder (PMMA particles), a silicone resin powder, a polystyrene resin powder, a polycarbonate resin powder, an acrylic styrene resin powder, a benzoguanamine resin powder, a melamine resin powder, a polyolefin resin powder, a polyester resin powder, a polyamide resin powder, a polyimide resin powder, and a polyfluoroethylene resin powder. One kind of the inorganic particles and organic particles may be used alone, or two or more kinds of the same may be used in combination.

The particle size (D) (weight-average particle size) of the particles is preferably in the range from 2.5 to 10 $\mu$m.

By setting the weight-average particle size of the particles in the above-described range, the anti-glare film can have further superior anti-glare properties and can prevent white blur from occurring, for example. The weight-average particle size of the particles is more preferably from 3 to 7 $\mu$m. The weight-average particle size of the particles can be measured by the Coulter counter method, for example. For example, a particle size distribution measurement apparatus (COULTER MULTISIZER (trade name), produced by Beckman Coulter, Inc.) using a pore electrical resistance method is employed to measure an electrical resistance of an electrolyte corresponding to the volume of the particles when the particles pass through the pores. Thus, the number and volume of particles are measured and then the weight average particle size is calculated.

The shape of the particles is not particularly limited and may be, for example, an approximately spherical shape in the form of a bead or an indefinite shape such as a powder and is preferably an approximately spherical shape, more preferably an approximately spherical shape with an aspect ratio of 1.5 or less. Most preferably, the particles are spherical particles.

The proportion of the particles in the anti-glare layer is preferably in the range from 0.2 to 12 parts by weight, more preferably from 0.5 to 12 parts by weight, yet more preferably from 1 to 7 parts by weight, relative to 100 parts by weight of the resin. By setting the proportion of the particles in the above-described range, flocculated portions can be suitably formed, and the anti-glare film can have further superior anti-glare properties and can prevent white blur from occurring, for example.

In the anti-glare layer, the fillers may be particles or thixotropy-imparting agents. The fillers may contain only the thixotropy-imparting agents or the thixotropy-imparting agents in addition to the particles. When the fillers contain the thixotropy-imparting agents, the flocculation state of the particles can be controlled easily. Examples of the thixotropy-imparting agents include organoclay, oxidized polyolefin, and denatured urea.

The organoclay is preferably layered clay which has been subjected to an organification treatment in order to improve affinity with the resin. The organoclay may be prepared in-house or a commercially available product. Examples of the commercially available product include LUCENTITE SAN, LUCENTITE STN, LUCENTITE SEN, LUCENTITE SPN, SOMASIF ME-100, SOMASIF MAE, SOMASIF MTE, SOMASIF MEE, and SOMASIF MPE (trade names, produced by CO-OP Chemical Co. Ltd.); S-BEN, S-BEN C, S-BEN E, S-BEN W, S-BEN P, S-BEN WX, S-BEN N-400, S-BEN NX, S-BEN NX80, S-BEN NO12S, S-BEN NEZ, S-BEN NO12, S-BEN NE, S-BEN NZ, S-BEN NZ70, ORGANAIT, ORGANAIT D, and ORGANAIT T (trade names, produced by Hojun Co., Ltd.); KUNIPIA F, KUNIPIA G, and KUNIPIA G4 (trade names, produced by Kunimine Industries, Co. Ltd.); and TIXOGEL VZ, CLAYTONE HT, and CLAYTONE 40 (trade names, produced by Rockwood Additives Limited).

The oxidized polyolefin may be prepared in-house or a commercially available product. Examples of the commercially available product include DISPARON 4200-20 (trade name, produced by Kusumoto Chemicals, Ltd.) and FLOWNON SA300 (trade name, produced by Kyoeisha Chemical Co., Ltd).

The denatured urea is a reactant of an isocyanate monomer or an adduct thereof and organic amine. The denatured urea may be prepared in-house or a commercially available product. The commercially available product can be, for example, BYK410 (produced by BYK-Chemie Corporation).

One kind of the thixotropy-imparting agents may be used alone, or two or more kinds of the same may be used in combination.

The proportion of the thixotropy-imparting agents in the anti-glare layer is preferably in the range from 0.2 to 5 parts by weight, more preferably from 0.4 to 4 parts by weight, relative to 100 parts by weight of the resin.

The thickness (d) of the anti-glare layer is not particularly limited and is preferably in the range from 3 to 12 $\mu$m. The anti-glare film can be prevented from warping by setting the thickness (d) of the anti-glare layer in the above-described range, resulting in avoidance of a problem of reduction in productivity such as a failure at the time of transportation, for example. Moreover, when the thickness (d) is in the above-described range, the weight-average particle size (D) is preferably in the range from 2.5 to 10 $\mu$m as mentioned above. With the above-mentioned combination of the thickness (d) of the anti-glare layer and the weight-average particle size (D) of the particles, the anti-glare film can have further superior anti-glare properties. The thickness (d) of the anti-glare layer is more preferably from 3 to 8 $\mu$m.

The relationship between the thickness (d) of the anti-glare layer and the weight-average particle size (D) of the particles preferably is $0.3 \leq D/d \leq 0.9$. With such relationship, the anti-glare film can have further superior anti-glare properties, can prevent white blur from occurring, and can have no defect in outward appearance.

As mentioned above, in the anti-glare film according to the present invention, the anti-glare layer includes a flocculated portion forming a convex portion on a surface of the anti-glare layer by flocculation of the fillers, and in the flocculated portion, the fillers are present in the state of being gathered in one direction in an in-plane direction of the anti-glare layer. Thus, the convex portions can be gradual convex portions having anisotropy. When the anti-glare film includes convex portions in such shape, reflected glare of light from a fluorescent lamp and the like can be prevented from occurring.

The surface profile of the antiglare layer can be designed as appropriate by controlling the flocculation state of the fillers contained in the anti-glare layer-forming material. The flocculation state of the fillers can be controlled by quality of the material of the fillers (e.g., the state of chemical modification on the surfaces of the particles, affinity with a solvent or a resin, or the like), the kinds or the combination of a resin (binder) and a solvent, and the like, for example. The flocculation state of the particles can be accurately controlled by the thixotropy-imparting agents. Therefore, in the present invention, the surface profile of the anti-glare film can be widely controlled (adjusted). Thus, for example, fillers can be flocculated in the above-described flocculation state, and the convex portions can be gradual convex portions. Moreover, by adjusting the proportion of the particles relative to 100 parts by weight of the resin in the anti-glare layer forming material as mentioned above, the surface profile of the anti-glare film can be widely controlled (adjusted).

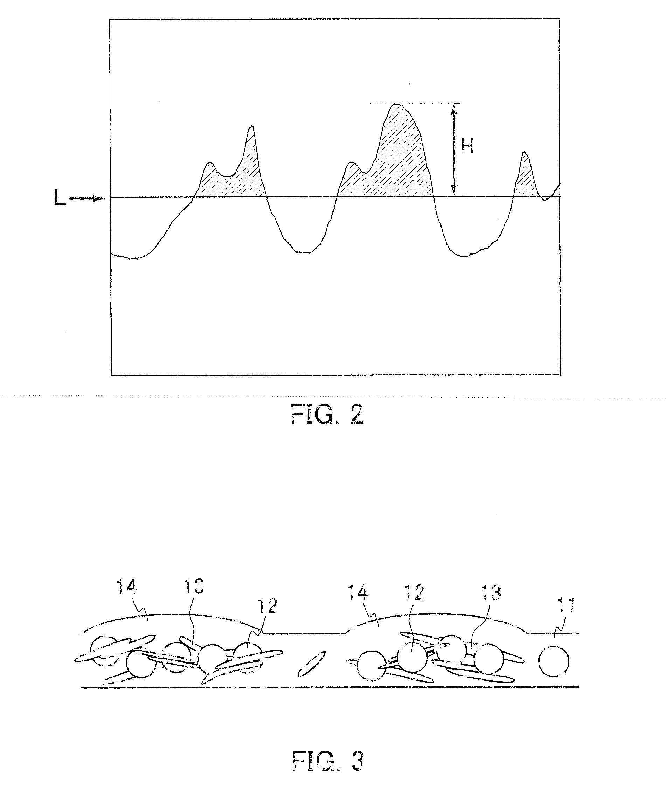

In the anti-glare film, the height of each convex portion from the roughness mean line of the anti-glare layer is preferably less than 0.4 times, more preferably in the range of 0.01 or more to less than 0.4 times, yet more preferably 0.01 or more to less than 0.3 times, the thickness of the anti-glare layer. With the height of each convex portion in the above-described range, formation of a projection as a defect in outward appearance in each convex portion can be suitably prevented. When the anti-glare film according to the present invention includes convex portions with such height, a defect in outward appearance can be less prone to occur. The height from the mean line is described with reference to FIG. 2. FIG. 2 is a schematic view of a two-dimensional profile of a cross section of the anti-glare layer, where the straight line L indicates a roughness mean line (center line) in the two-dimensional profile. The height H from the roughness mean line to the top (of the convex portion) in the two-dimensional profile is the height of the convex portion in the present invention. In FIG. 2, a part of the convex portion, crossing the mean line is indicated by oblique hatching. The thickness of the anti-glare layer is calculated by measuring the overall thickness of the anti-glare film and subtracting the thickness of the translucent base from the overall thickness. The overall thickness and the thickness of the translucent base can be measured using a microgauge-type thickness gauge, for example.

When the translucent base in the anti-glare film is formed of a resin or the like, it is preferred that there is a permeable layer at the interface between the translucent base and the anti-glare layer. The permeable layer is formed by permeating a resin component contained in the anti-glare layer forming material through the translucent base. When the permeable layer is formed, adhesion between the translucent base and the anti-glare layer can be improved, which is preferable. The thickness of the permeable layer is preferably in the range from 0.2 to 3 $\mu$m, more preferably from 0.5 to 2 $\mu$m. For example, when the translucent base is triacetylcellulose, and the resin contained in the anti-glare layer is an acrylic resin, the permeable layer can be formed. The permeable layer can be checked, and the thickness thereof can be measured, by observing a cross section of the anti-glare film using a transmission electron microscope (TEM), for example.

Even when the method for producing an anti-glare film is applied to a production of such anti-glare film including a permeable layer, the surface profile of the anti-glare film can be widely and freely controlled. Thus, for example, desired surface asperities with gradual convex portions achieving both of having anti-glare properties and preventing white blur from occurring can be easily formed. When the translucent base has poor adhesion with the anti-glare layer, it is preferred that the permeable layer is formed so as to be thick in order to improve the adhesion.

FIG. 3 schematically shows a configuration of an example of the anti-glare film according to the present invention. FIG. 3 is a mere example, and the present invention is not limited thereby. FIG. 3 shows an example in the case where the anti-glare film according to the present invention contains thixotropy-imparting agents. As shown in FIG. 3, particles 12 and thixotropy-imparting agents 13 are flocculated in an anti-glare layer 11 of this anti-glare film, so that convex portions 14 are formed on the surface of the anti-glare layer 11. The flocculation state of the particles 12 and the thixotropy-imparting agents 13 is not particularly limited, and the thixotropy-imparting agents 13 are prone to be present at least around the particles 12. In flocculated portions forming the convex portions 14, particles 12 are present in the state of being gathered in one direction in an in-plane direction of the anti-glare layer 11. Thus, the convex portions 14 become gradual portions.

It is assumed that the above-mentioned gradual convex portions are formed by the following mechanism. The present invention, however, is not at all limited by this assumption.

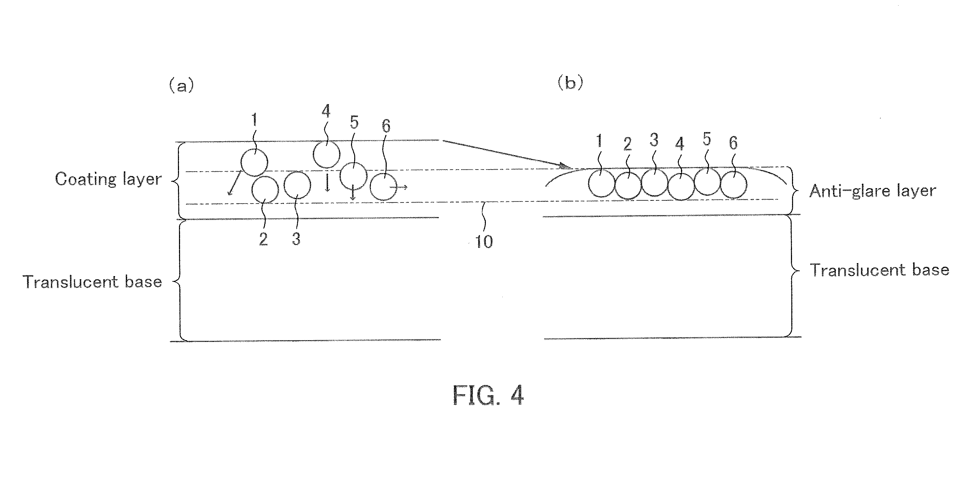

FIG. 4 is a diagram schematically showing the state of a cross section in the thickness direction of the anti-glare film according to the present invention, viewed from a side surface in order to illustrate a mechanism of the flocculation state in the anti-glare layer of the anti-glare film according to the present invention. In FIG. 4, (a) shows the state of forming a coating layer by coating the coating solution containing a solvent to a translucent base, and (b) shows the state of the anti-glare layer formed by removing the solvent from the coating layer.

The mechanism of forming the above-mentioned gradual convex portions is described below with reference to FIG. 4. As shown in (a) and (b) of FIG. 4, the thickness of the coating layer is shrunk (reduced) by removing the solvent contained in the coating layer. The lower surface side (back surface side) of the coating layer is terminated by the translucent base, and thus the coating layer is shrunk from the upper surface side (the front surface side) of the coating layer. Particles (e.g., particles 1, 4, and 5) present in a portion from which the thickness of the coating layer is reduced in (a) of FIG. 4 are prone to move to the lower surface side of the coating layer by the reduction in thickness. On the other hand, a movement, to the lower surface side, of particles (e.g., particles 2, 3, and 6) present in a position relatively lower on the lower surface side, which is not affected or is less prone to be affected by the change in the thickness is suppressed by an anti-settling effect (thixotropic effect) of the thixotropy-imparting agents contained in the coating solution (e.g., the particles do not move to the side lower than the double-dashed chain line 100). Therefore, even when the coating layer is shrunk, the particles (particles 2, 3, and 6) on the lower surface side remain in almost the same position without being pushed toward the lower side (back surface side) by the particles (particles 1, 4, and 5) moving from the front surface side. Since the particles (particles 2, 3, and 6) on the lower surface side remain in almost the same position, the particles (particles 1, 4, and 5) moving from the front surface side move to positions beside the particles on the lower surface side (in an in-plane direction of the coating layer) in which the particles on the lower surface side are not present. It is assumed that the particles in the anti-glare layer of the anti-glare film according to the present invention are present in the state of gathering in an in-plane direction of the anti-glare layer as described above.

Since the particles in the anti-glare layer are flocculated in an in-plane direction of the anti-glare layer as described above, the convex portions become gradual convex portions as shown in FIG. 4. Moreover, when the anti-glare layer contains thixotropy-imparting agents having an anti-settling effect, the excess flocculation of the particles in the thickness direction of the anti-glare layer is avoided. Thus, formation of a projection as a defect in outward appearance of the surface of the anti-glare layer can be prevented.

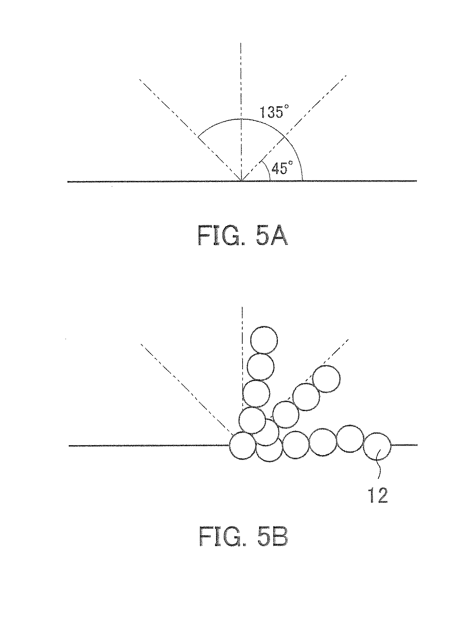

The anti-glare film according to the present invention may be an anti-glare film having the gradual convex portions, capable of preventing formation of a projection to be a defect in outward appearance on the surface of the anti-glare layer and is, however, not limited by this. In the anti-glare film according to the present invention, some of the particles may be present in positions in which the particles directly or indirectly overlap in the thickness direction of the anti-glare layer, for example. In the case where the overlap of the particles is represented by the number of overlapping particles, the "thickness direction" of the anti-glare layer is, for example, as shown in the schematic views of FIGs. 5A and 5B, a direction in a range from 45° to 135° of an angle with the in-plane direction of the translucent base (in-plane direction of the anti-glare layer). When the thickness (d) of the antiglare layer is in the range from 3 to 12 $\mu$m, the particle size (D) of the particles is in the range from 2.5 to 10 $\mu$m, and a relationship between the thickness (d) and the particle size (D) satisfies $0.3 \leq D/d \leq 0.9$, the number of overlapping particles in the thickness direction of the anti-glare layer is, for example, preferably 4 or less, more preferably 3 or less, for example.

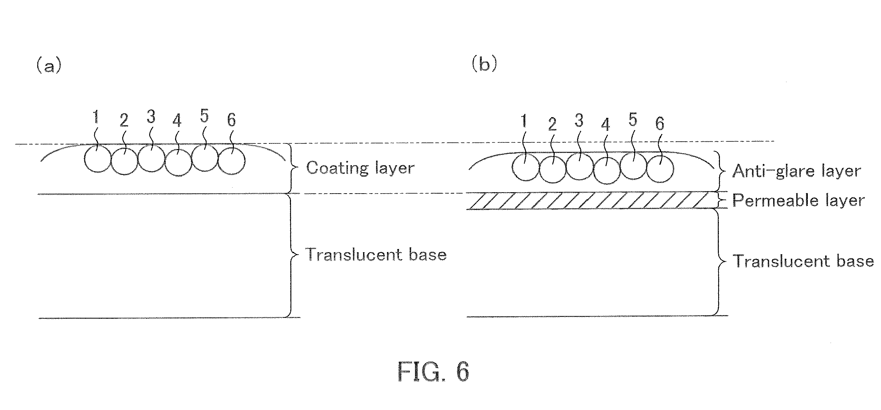

Next, the case where the above-mentioned permeable layer is formed between the translucent base and the anti-glare layer in the above-mentioned assumable mechanism is described with reference to the diagram of FIG. 6. In FIG. 6, (a) shows the state of the middle of forming an anti-glare layer by removing a solvent from a coating layer, and (b) shows the state of the anti-glare layer formed by removing a solvent from a coating layer. In FIG. 6, the permeable layer is indicated by oblique hatching. Note here that the present invention is not at all limited by the following description.

As shown in (a) and (b) of FIG. 6, the thickness of a coating layer is shrunk (reduced) by removing a solvent contained in the coating layer. Thus, an anti-glare layer is formed. Then, a resin contained in the coating solution is permeated through a translucent base with the formation of the anti-glare layer. Thus, the permeable layer is formed between the anti-glare layer and the translucent base. As shown in (a) of FIG. 6, before the permeable layer is formed, the particles are prone to be present in the state of being apart from the translucent base without being in contact with the translucent base by the anti-settling effect of the thixotropy-imparting agents. Then, when the permeable layer is formed, the resin on the translucent base side, i.e., the resin on the lower side of the particles (translucent base side) is mainly permeated through the permeable layer. Thus, following the permeation of the resin through the translucent base, a group of particles flocculated in the in-plane direction of the anti-glare layer and the resin covering them move together to the translucent base side. That is, they move to the translucent base side as shown in (b) of FIG. 6 while maintaining the flocculation state of the particles shown in (a) of FIG. 6. Thus, the group of particles and the resin covering them on the front surface side of the anti-glare layer move as if falling down to the translucent base side as a whole while maintaining the surface profile. Thus, it is assumed that the surface profile of the anti-glare layer in the anti-glare film according to the present invention is less prone to change.

Moreover, it is assumed that in the case where the coating solution has thixotropy (thixotropic properties) by the thixotropy-imparting agents, the resin composing the convex portion by covering a group of particles is less prone to move to the translucent base side even when the permeable layer is formed so as to be thick. Combined with such effect, it is assumed that the surface profile of the anti-glare layer is less prone to change in the anti-glare film according to the present invention.

It is preferred that in the anti-glare layer of the anti-glare film according to the present invention, the number of defects in outward appearance having the maximum diameter of 200 $\mu$m or more is 1 or less per 1 m$^2$ of the anti-glare layer. It is more preferred that the anti-glare film according to the present invention does not have any defect in outward appearance.

The haze value of the anti-glare film is preferably in the range from 0% to 10%. The haze value is a haze value (cloudiness) of the entire anti-glare film according to JIS K 7136 (2000 version). The haze value is more preferably from 0% to 5%, yet more preferably from 0% to 3%. In order to make the haze value be in the above-described range, it is preferred that the particles and the resin are selected so that the difference in refractive index between the particles and the resin is in the range from 0.001 to 0.02. When the haze value is in the above-described range, a sharp image can be obtained, and a contrast in dark place can be improved.

The arithmetic average surface roughness Ra defined in JIS B 0601 (1994 version) of the surface asperities of the anti-glare layer of the anti-glare film is preferably in the range from 0.01 to 0.3 μm, more preferably from 0.02 to 0.2 μm. In order to prevent reflected glare of external light and an image from occurring on the surface of the anti-glare film, the surface preferably has roughness to some extent. When Ra is 0.01 μm or more, the reflected glare can be ameliorated. When Ra is in the above-described range, scattering of reflected light when viewed from oblique directions is suppressed, white blur can be ameliorated, and a contrast in bright place can be improved in the case of using the anti-glare layer in an image display or the like.

The average convex-to-convex distance Sm (mm) of the surface asperities, measured according to JIS B 0601 (1994 version) is preferably in the range from 0.05 to 0.4, more preferably from 0.08 to 0.3. When Sm is in the above-described range, the anti-glare film can have further superior anti-glare properties and can prevent white blur from occurring, for example.

The average tilt angle θa (°) of the surface asperities of the anti-glare layer of the anti-glare film is preferably in the range from 0.1 to 1.5, more preferably from 0.2 to 1.0. The average tilt angle θa is a value defined by the following mathematical equation (1). The average tilt angle θa is a value measured by the method described below in the section of Examples, for example.

$$\text{Average tilt angle } \theta a = \tan^{-1}\Delta a \qquad (1)$$

In the mathematical equation (1), as shown in the following mathematical equation (2), Δa denotes a value obtained by dividing the sum (h1 + h2 + h3 ••• + hn) of the differences (heights h) between adjacent peaks and the lowest point of the trough formed therebetween by the standard length L of the roughness curve defined in JIS B 0601 (1994 version). The roughness curve is a curve obtained by removing the surface waviness components with longer wavelengths than the predetermined one from the profile curve using a retardation compensation high-pass filter. The profile curve denotes a profile that appears at the cut surface when an object surface was cut in a plane perpendicular to the object surface.

$$\Delta a = (h1 + h2 + h3 \cdot\cdot\cdot + hn) / L \qquad (2)$$

When all of Ra, Sm, and θa are in the above described ranges, the anti-glare film can have further superior anti-glare properties and can prevent white blur from occurring.

The method for producing an anti-glare film is not particularly limited, and an anti-glare film can be produced by any method. An anti-glare film, however, is produced preferably by the method for producing an anti-glare film according to the present invention. According to the method for producing an anti-glare film according to the present invention, the surface profile of the anti-glare film can be adjusted by adjusting the shear distance of the coating layer. Moreover, as mentioned above, it is preferred that the surface profile of the anti-glare film is adjusted by adjusting the number of parts by weight of the particles relative to 100 parts by weight of the resin in the anti-glare layer-forming material, if necessary. By the above-described adjustments, the surface profile of the anti-glare film can be widely and freely changed (controlled) even when the kinds of the resin and the particles are the same, for example. Specifically, for example, the arithmetic average surface roughness Ra, the average convex-to-convex distance Sm, and the average tilt angle θa on the surface of the anti-glare film can be widely and freely adjusted (controlled).

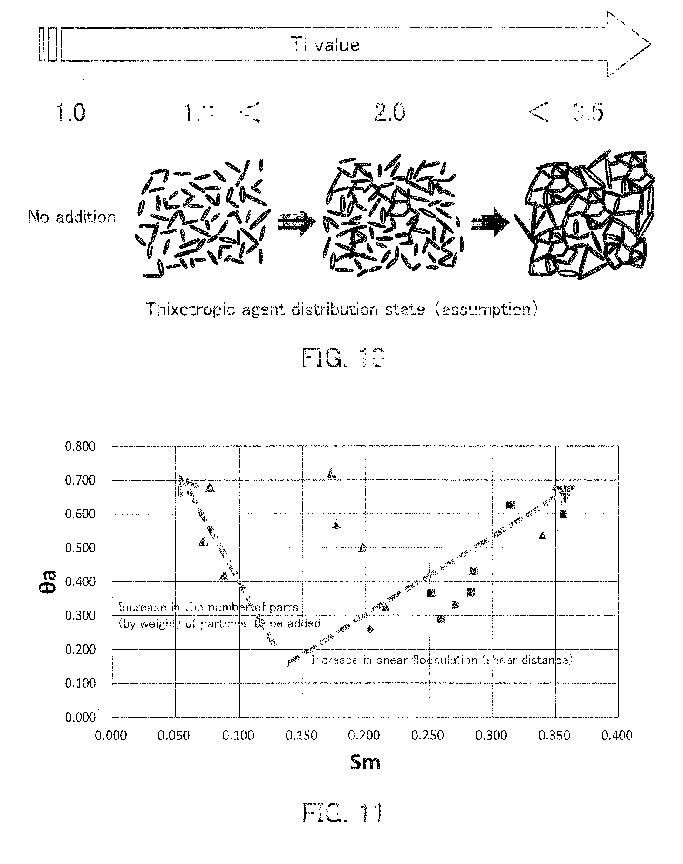

A graph of FIG. 11 schematically shows an example of the surface profile control of the anti-glare film by the shear distance and the number of parts by weight of the particles in the method for producing an anti-glare film according to the present invention. As shown in FIG. 11, when the shear distance is increased, the average convex-to-convex distance Sm and the average tilt angle θa are increased. When the number of parts of the particles to be added (the number of parts by weight of the particles relative to 100 parts by weight of the resin) is increased, the average convex-to-convex distance Sm is reduced, and the average tilt angle θa is increased. FIG. 11, however, is a mere example, and the present invention is not limited thereby.

The method for producing an anti-glare film according to the present invention is carried out by providing an anti-glare layer-forming material (coating solution) containing the resin, the particles, the thixotropy-imparting agents, and a solvent; coating the anti-glare layer-forming material (coating solution) on at least one surface of the translucent base such as the transparent plastic film base to form a coating layer, and curing the coating layer to form the anti-glare layer, for example.

It is preferred that the coating solution exerts thixotropic properties, and the Ti value thereof defined by the following equation is preferably in the range from 1.3 to 3.5, more preferably from 1.4 to 3.2, yet more preferably from 1.5 to 3.

$$\text{Ti value} = \beta 1/\beta 2$$

In the equation, ß1 represents a viscosity measured at a shear rate of 20 (1/s) using RheoStress RS6000 produced by HAAKE, and ß2 represents a viscosity measured at a shear rate of 200 (1/s) using RheoStress RS6000 produced by HAAKE.

When the Ti value is 1.3 or more, problems of generating a defect in outward appearance and deteriorating characteristics of anti-glare properties and white blur increase are less prone to arise. When the Ti value is 3.5 or less, a problem of dispersing the particles without flocculating and the like are less prone to arise.

A schematic view of FIG. 10 shows the relationship between the Ti value of a coating solution and the assumable distribution of thixotropy-imparting agents in the method for producing an anti-glare film. As shown in FIG. 10, when the Ti value is less than 1.3, it is assumed that the thixotropy-imparting agents are thinly distributed, and in some cases, a defect in outward appearance is prone to be generated, and characteristics of anti-glare properties and white blur are deteriorated. When the Ti value exceeds 3.5, it is assumed that the thixotropy-imparting agents become dense even though an anti-settling effect is improved, so that the particles are less prone to be flocculated and are prone to be in the dispersed state. In contrast, when the Ti value is in the range from 1.3 to 3.5, it is assumed that the thixotropy-imparting agents can appropriately be in the distributed state, so that the particles can be suitably flocculated. Note here that the distributed state of the thixotropy-imparting agents shown in FIG. 10 is a mere assumption, and the present invention is not at all limited by this assumption.

In the method for producing an anti-glare film according to the present invention, the coating solution may or may not contain thixotropy-imparting agents and preferably contains thixotropy-imparting agents because of easily exerting thixotropic properties. Moreover, when the coating solution contains the thixotropy-imparting agents as mentioned above, an anti-settling effect of the particles (thixotropic effect) can be obtained. Furthermore, the surface profile of the anti-glare film can further be widely and freely controlled by the shear flocculation of the thixotropy-imparting agents themselves.

As a method for forming a coating layer by coating the coating solution on the translucent base, a coating method such as a fountain coating method, a die coating method, a spin coating method, a spray coating method, a gravure coating method, a roller coating method, or bar coating method can be used, for example.

The solvent is not particularly limited, and various solvents can be used. The solvents may be used alone or in a combination of two or more of them. There are optimal kinds of solvents and the optimal ratio thereof according to the composition of the resin, the kinds of the particles and the thixotropy-imparting agents, and the contents thereof in order to obtain the anti-glare film according to the present invention. The solvent is not particularly limited, and examples thereof include alcohols such as methanol, ethanol, isopropyl alcohol, butanol, and 2-methoxyethanol; ketones such as acetone, methylethylketone, methylisobutylketone, and cyclopentanone; esters such as methyl acetate, ethyl acetate, and butyl acetate; ethers such as diisopropyl ether and propyleneglycol monomethylether; glycols such as ethyleneglycol and propyleneglycol; cellosolves such as ethyl cellosolve and butyl cellosolve; aliphatic hydrocarbons such as hexane, heptane, and octane; and aromatic hydrocarbons such as benzene, toluene, and xylene.

In the case where triacetylcellulose (TAC) is employed as a translucent base, and a permeable layer is formed, a good solvent to TAC can be suitably used, for example. Examples of the solvent include ethyl acetate, methyl ethyl ketone, and cyclopentanone.

In the case where the coating solution contains thixotropy-imparting agents, the anti-glare layer-forming material (coating solution) can favorably have thixotropic properties by selecting a solvent as appropriate. For example, in the case of using organoclay, toluene and xylene can be suitably used alone or in combination. For example, in the case of using oxidized polyolefin, methyl ethyl ketone, ethyl acetate, and propylene glycol monomethyl ether can be suitably used alone or in combination. For example, in the case of using denatured urea, butyl acetate and methyl isobutyl ketone can be suitably used alone or in combination.

Various leveling agents can be added to the anti-glare layer-forming material. For the purpose of preventing unevenness in coating (causing a surface to be evenly coated), a fluorine-based leveling agent or a silicone-based leveling agent can be used as the leveling agent, for example. In the present invention, a leveling agent can be selected as appropriate according to the case where the surface of the anti-glare layer is required to have anti-smudge properties, the case where an antireflection layer (low refractive index layer) and/or a layer containing interlayer fillers is formed on the anti-glare layer as mentioned below. In the present invention, for example, the coating solution can have thixotropic properties by causing the coating solution to contain thixotropy-imparting agents. Thus, the unevenness in coating is less prone to occur. In this case, for example, there is an advantage of widening the choice of the leveling agents.

The amount of the leveling agent to be added is, for example, 5 parts by weight or less, preferably in the range from 0.01 to 5 parts by weight, relative to 100 parts by weight of the resin.

A pigment, a filler, a dispersant, a plasticizer, a UV absorber, a surfactant, an anti-smudge agent, an antioxidant, or the like may be added to the anti-glare layer-forming material to the extent of not impairing functions of the anti-glare layer-forming material. These additives may be used alone or in a combination of two or more of them.

Any of conventionally known photoinitiators described in JP 2008-88309 A can be used in the anti-glare layer-forming material, for example.

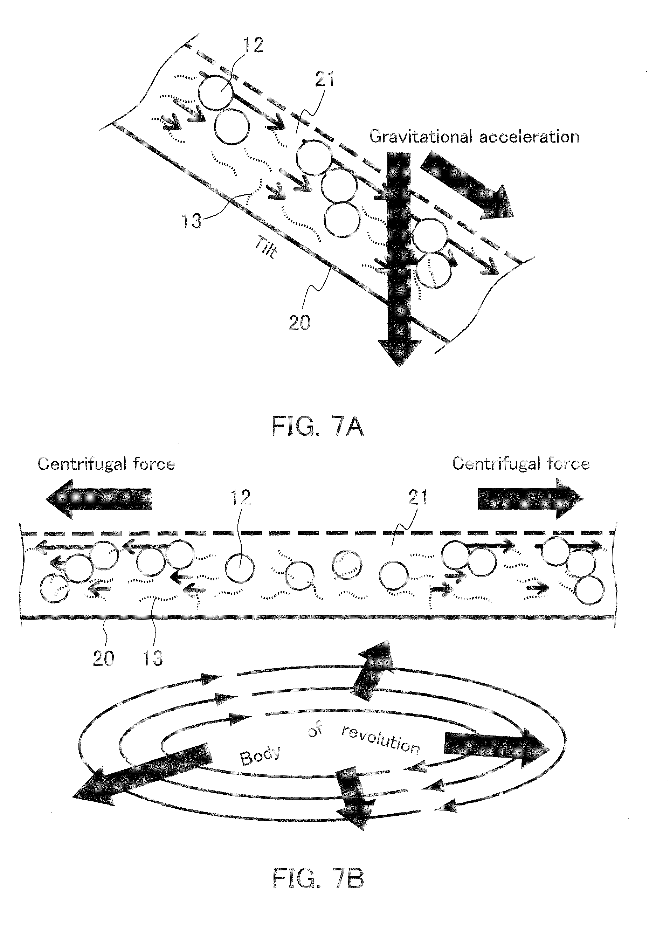

For example, any of the following methods can be suitably used to form flocculated portions including the particles in the state of being gathered in one direction in the in-plane direction of the anti-glare layer. In FIGs. 7A and 7B, the numeral 20 indicates a translucent base, the numeral 21 indicates a coating layer, the numeral 12 indicates particles, and the numeral 13 indicates thixotropy-imparting agents. FIG. 7A shows an example of causing a surface slip of the coating layer 21 to occur by tilting the translucent base 20. Application of force in the shear direction of the coating layer causes a difference in movement rate between the resin and the particles in the thickness direction of the coating layer. Therefore, the particles increase opportunities of contacting with each other. Thus, the flocculation of the particles (shear flocculation) occurs in one direction, so that anisotropic asperities can be generated on the surface of the anti-glare layer. As shown in FIG. 7A, for example, force at the acceleration of a component along the tilt direction of the gravitational acceleration can be applied to the shear direction of the coating layer 21 by tilting the translucent base 20. As described above, by setting a tilt direction of the translucent base 20, a direction in which particles are flocculated (anisotropy of the particles) can be appropriately changed. FIG. 7B shows an example of causing a surface slip of the coating layer 21 to occur by rotating the translucent base 20 maintained to be horizontal on a body of revolution. As shown in FIG. 7B, for example, force at the acceleration of the centrifugal force can be applied in the shear direction of the coating layer 21 by rotating the translucent base 20 maintained to be horizontal on the body of revolution. The shear flocculation is more prone to occur by the use of the coating solution containing thixotropy-imparting agents. The effect of the force in the shear direction to the coating layer can be estimated by calculating the shear distance described below. In the case of using a coating solution containing no thixotropy-imparting agent, it is preferred that the shear distance of the coating layer is set to be longer than in the case where a coating solution containing thixotropy-imparting agents.

In the formation of the anti-glare layer, the shear distance S of the coating layer, defined by the following equation (I) is preferably in the range from $0.005 \times 10^{-9}$ to $120 \times 10^{-9}$ m. The shear distance S is more preferably from $0.005 \times 10^{-9}$ to $60 \times 10^{-9}$ m, yet more preferably from $0.01 \times 10^{-9}$ to $15 \times 10^{-9}$ m,

$$S = \int V dt \qquad (I)$$

In the equation (I),

S: shear distance (m)
V: shear velocity (m/s)
t: shear holding time (s).

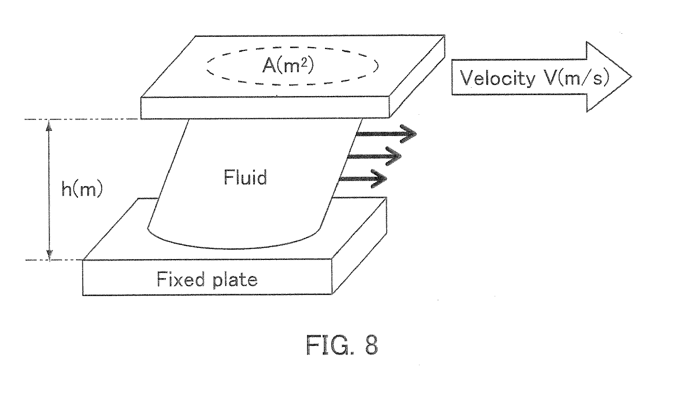

A method for calculating the shear velocity V of the coating layer is described with reference to FIG. 8. For the sake of convenience of description, the acceleration a and the shear velocity V are constant without changing over time in FIG. 8. Assuming that the mass of the fluid shown in FIG. 8 is represented by m (kg), the thickness of the fluid is represented by h (m), and the area of contact between a fixed flat plate and the fluid is represented by A ($m^2$), the velocity (shear velocity) V (m/s) at the upper part of the fluid can be determined by the equation, $V = mah/A\eta$. In the equation, a represents the acceleration ($m/s^2$), and $\eta$ represents the viscosity (Pa•s) of the fluid. The specific gravity k ($kg/m^3$) of the fluid is determined by $k = m/hA$. Thus, $V = mah/A\eta = kah^2/\eta$. Therefore, as mentioned above, the shear velocity V of the coating layer on the translucent base can be defined by the following equation (II),

$$V = kah^2/\eta \qquad (II)$$

k: specific gravity of coating layer ($kg/m^3$)
a: acceleration ($m/s^2$)
h: thickness of coating layer (m)
$\eta$: viscosity of coating layer (Pa•s).

As can be seen from the equation (II), the shear velocity V of the coating layer is increased by (1) increasing the acceleration a, (2) increasing the thickness h of the coating layer, or (3) reducing the viscosity η of the coating layer. The increase in shear velocity V of the coating layer causes a difference in movement rate between the resin and the particles in the thickness direction of the coating layer. Therefore, the particles increase opportunities of contacting with each other. Thus, the flocculation of the particles (shear flocculation) occurs. In the present invention, the shear distance S is represented by the following equation (I) as mentioned above. Moreover, in FIG. 8, as mentioned above, the acceleration a and the shear velocity V are constant without changing over time. Thus, the shear distance S is represented by the following equation (I'). As can be seen from the following equations (I) and (I'), the shear distance S can be increased by increasing the shear velocity V in the method for producing an anti-glare film according to the present invention, assuming that the shear holding time t is constant.

$$S = \int V dt \qquad (I)$$

$$S = V \times t \qquad (I')$$

The shear flocculation is more prone to occur by the use of a coating solution containing thixotropy-imparting agents. In the case of using a coating solution containing no thixotropy-imparting agent, the shear velocity V (velocity when the shear distance S is in the range from $0.005 \times 10^{-9}$ to $120 \times 10^{-9}$ m) of the coating layer is preferably in the range from $0.05 \times 10^{-9}$ to $2.0 \times 10^{-9}$ m/s, more preferably from $0.05 \times 10^{-9}$ to $1.0 \times 10^{-9}$ m/s, yet more preferably from $0.10 \times 10^{-9}$ to $0.25 \times 10^{-9}$ m/s.

In order to adjust the shear velocity V at the coating layer, any of the methods shown in FIGs. 7A and 7B can be used, for example. That is, for example, as shown in FIG. 7A, a component along the tilt direction of the gravitational acceleration has the acceleration a by tilting the translucent base 20, so that the shear velocity V of the coating layer 21 can be increased. For example, as shown in FIG. 7B, the acceleration a is increased by the centrifugal force caused by rotating the translucent base 20 maintained to be horizontal on a body of revolution, so that the shear velocity V of the coating layer 21 can be increased. By adjusting the shear velocity V as described above, the shear velocity V can be maintained to be constant, for example.

It is preferred that the shear holding time t (time when the shear distance S is in the range from $0.005 \times 10^{-9}$ to $120 \times 10^{-9}$ m) is adjusted in the range from 0.1 to 60 s. The shear holding time t is preferably 1 second or more in the case of using a coating solution containing thixotropy-imparting agents. The shear holding time t is preferably 30 seconds or more in the case of using a coating solution containing no thixotropy-imparting agent. By setting the shear holding time t to 30 seconds or more, the shear flocculation is more prone to occur. The shear holding time t is more preferably 60 seconds or more. In order to further prevent white blur from occurring in the case of using a coating solution containing thixotropy-imparting agents, the shear holding time t can be short (30 seconds or less) although it depends on the shear velocity. The present invention, however, is not limited thereby, and in the case of using a coating solution containing thixotropy-imparting agents, the shear holding time t may be 30 seconds or more.

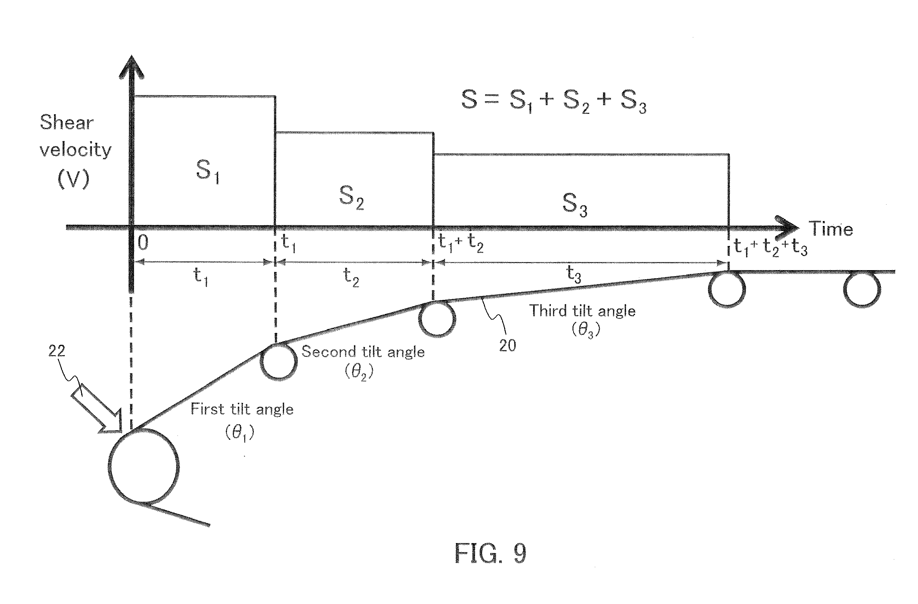

As described above, by adjusting at least one of the shear velocity V and the shear holding time t, the shear distance S can be set in the above-mentioned range. In the present invention, the shear flocculation of the particles is caused to occur by setting (controlling) the shear distance S calculated from the shear velocity V and the shear holding time t in the above-mentioned range, so that the above-mentioned effects of the present invention can be obtained. The above description was made with reference to the case where the shear velocity V is constant. The present invention, however, is not limited by this example. The shear velocity V of the coating layer may change as appropriate over time as mentioned above, for example. More specifically, for example, as shown in FIG. 9, the shear velocity V may change from the shear velocity $V_1$ (in the shear holding time $t_1$) to the shear velocity $V_2$ (in the shear holding time $t_2$) and may further change to the shear velocity $V_3$ (in the shear holding time $t_3$). In this case, for example, the shear distance S is calculated by the sum ($S = S_1 + S_2 + S_3$) of shear distances at the respective shear velocities, i.e., the shear distance $S_1$ ($V_1 \times t_1$), the shear distance $S_2$ ($V_2 \times t_2$), and the shear distance $S_3$ ($V_3 \times t_3$). In FIG. 9, a coating solution 22 is coated on a translucent base 20 at the left side of FIG. 9 with a transfer of the translucent base 20 from the left side to the right side of FIG. 9 on a coating line. Then a tilt angle at the time of the transfer of the translucent base 20 changes from the first tilt angle $\theta_1$ to the second tilt angle $\theta_2$ and further changes to the third tilt angle $\theta_3$, so that the acceleration a changes. Thus, the shear velocity V changes as mentioned above.

Subsequently, the coating layer is cured to form an anti-glare layer. It is preferred that the coating layer is dried prior to the curing. The drying may be, for example, natural drying, air drying by blowing air, heat drying, or a combination thereof.

The way of curing the coating layer is not particularly limited and is preferably ultraviolet curing. The amount of irradiation with the energy radiation source is preferably from 50 to 500 mJ/cm$^2$ in terms of accumulative exposure at the ultraviolet wavelength of 365 nm. With the amount of irradiation of at least 50 mJ/cm$^2$, the coating layer is cured more sufficiently, and the resultant anti-glare layer has a more sufficient hardness. Moreover, with the amount of irradiation of 500 mJ/cm$^2$ or less, the resultant anti-glare layer can be prevented from being colored.

By forming the anti-glare layer on at least one surface of the translucent base such as a transparent plastic film base as described above, the anti-glare film can be produced. The anti-glare film may be produced by a method other than the above-mentioned method. It is preferred that the anti-glare film has the hardness of 2H or more in terms of pencil hardness although it is influenced by the thickness of the layer.

The anti-glare film according to the present invention can be, for example, the one obtained by forming an anti-glare layer on one surface of a transparent plastic film base. The anti-glare layer contains fillers, and thus, the anti-glare layer has surface asperities. In this example, the anti-glare layer is formed on one surface of the transparent plastic film base, and the present invention, however, is not limited by this. The anti-glare film may be the one obtained by forming anti-glare layers on both  surfaces of the transparent plastic film base. In this example, the anti-glare layer is a monolayer, and the present invention, however, is not limited by this. The anti-glare layer may have a multilayer structure obtained by laminating two or more layers.

In the anti-glare film according to the present invention, an antireflection layer (low refractive index layer) may be placed on the anti-glare layer. For example, in the case where the anti-glare film is attached to an image display, a light reflection at the interface between air and the anti-glare layer is one of the factors of reducing visibility of images. The antireflection layer reduces the surface reflection. The anti-glare layer and the antireflection layer may be formed on each of both surfaces of the transparent plastic film base. Furthermore, each of the anti-glare layer and the antireflection layer may have a multilayer structure obtained by laminating two or more layers.

In the present invention, the antireflection layer is a thin optical film whose thickness and refractive index are controlled strictly or the one including two or more of the thin optical films laminated together. The antireflection layer uses the interference effect of light to cancel opposite phases of incident light and reflected light and thereby exhibits an antireflection function. The wavelength range of visible light that allows the antireflection function to be exhibited is, for example, from 380 to 780 nm, the wavelength range in which particularly high visibility is obtained is in the range of 450 to 650 nm, and preferably, the antireflection layer is designed so that the reflectance at 550 nm, which is the center wavelength, is minimized.

When the antireflection layer is designed based on the effect of interference of light, the interference effect can be enhanced by, for example, a method of increasing the difference in refractive index between the antireflection layer and the anti-glare layer. Generally, in an antireflection multilayer having a structure including two to five thin optical layers (each with strictly controlled thickness and refractive index) that are laminated together, components with different refractive indices from each other are used to form a plurality of layers with a predetermined thickness. Thus, the antireflection layer can be designed at a higher degree of freedom, the antireflection effect can be improved, and the spectral reflection characteristics also can be made uniform (flat) in the visible light range. Since each layer of the thin optical film must be highly precise in thickness, a dry process such as vacuum deposition, sputtering, or CVD is generally used to form each layer.

Further, it is preferred that a contamination preventive film formed of a silane compound having a fluorine group, an organic compound having a fluorine group, or the like is laminated on the antireflection layer in order to prevent adhesion of contaminant and improve removability of adherent contaminant.

In the present invention, it is preferred that at least one of the translucent base such as the transparent plastic film base and the anti-glare layer is subjected to a  surface treatment when an anti-glare film is formed. When the transparent plastic film base is subjected to a surface treatment, adhesion to the anti-glare layer, or a polarizer or a polarizing plate can be further improved. When the anti-glare layer is subjected to a surface treatment, adhesion to the antireflection layer, or a polarizer or a polarizing plate can be further improved.

In the method for producing an anti-glare film in which the anti-glare layer is formed on one surface of the translucent base such as the transparent plastic film base, the other surface of the translucent base may be subjected to a solvent treatment in order to prevent the film from warping. Alternatively, in the method for producing an anti-glare film in which the anti-glare layer is formed on one surface of the translucent base such as the transparent plastic film base, a transparent resin layer may be formed on the other surface of the translucent base in order to prevent the film from warping.

The translucent base side such as the transparent plastic film base side of the anti-glare film obtained in the present invention can be attached to an optical element used in LCD via a pressure-sensitive adhesive or an adhesive. In order to perform the attachment, the translucent base may be subjected to any of the above-mentioned surface treatments. According to the method for producing an anti-glare film according to the present invention, the surface profile of the anti-glare film can be widely and freely controlled as mentioned above. Thus, the optical characteristics obtainable by laminating the anti-glare film on the other optical element using an adhesive or a pressure-sensitive adhesive is compatible in a wide range of the surface profile of the anti-glare film.

The optical element can be, for example, a polarizer or a polarizing plate, for example. The polarizing plate is generally configured so that a transparent protective film is laminated on one or both surfaces of the polarizer. When a transparent protective film is provided on both surfaces of the polarizer, the front and back transparent protective films may be formed of the same material or different materials. Polarizing plates are generally placed on both sides of a liquid crystal cell and is placed so that the absorption axes of two polarizing plates are substantially orthogonal to each other.

The configuration of the polarizing plate on which the anti-glare film has been laminated is not particularly limited and may be, for example, a configuration obtained by laminating a transparent protective film, the polarizer, and the transparent protective film on the anti-glare film in this order or a configuration obtained by laminating the polarizer and the transparent protective film on the anti-glare film in this order.

The configuration of the image display according to the present invention is the same as that of the conventional image display except that the anti-glare film is placed in a specific direction. For example, in the case of a LCD, the image display can be produced by incorporating a driving circuit through appropriately assembling components such as a liquid crystal cell, an optical element such as a polarizing plate, and if necessary, a lighting system (backlight or the like).

The image display according to the present invention may be used for any suitable applications. Examples of the applications include office automation equipment such as a PC monitor, a notebook PC, and a copy machine, portable devices such as a mobile phone, a watch, a digital camera, a personal digital assistant (PDA), and a handheld game machine, home electric appliances such as a video camera, a television set, and a microwave oven, vehicle equipment such as a back monitor, a monitor for a car-navigation system, and a car audio device, display equipment such as an information monitor for stores, security equipment such as a surveillance monitor, and nursing and medical equipment such as a monitor for nursing care and a monitor for medical use.

Examples

Next, the examples of the present invention are described together with the comparative examples. The present invention, however, is not limited by the examples and the comparative examples. Various characteristics in the examples and the comparative examples were evaluated or measured by the following methods.

(Specific gravity k (kg/m$^3$) of coating layer)

100 ml of a coating solution was provided, and the weight thereof was measured and was used as a specific gravity of a coating layer.

(Acceleration a (m/s$^2$))

The acceleration was calculated according to the following equation using a tilt angle of $\theta$,

$$a = \text{gravity acceleration } (9.8 \text{ m/s}^2) \times \sin\theta.$$

(Thickness h (m) of coating layer)

An non-contact interference thickness measurement was performed using "MCPD3750" produced by Otsuka Electronics Co., Ltd. The refractive index of the coating layer was 1.5.

(Viscosity $\eta$ (Pa•s) of coating layer)

A viscosity at the shear rate of 200 (1/s) was measured using RHEOSTRESS RS6000 produced by HAAKE.

(Measurement of surface profile)

A glass sheet (with a thickness of 1.3 mm) produced by Matsunami Glass Ind., Ltd. was attached to a surface of an anti-glare film on which no anti-glare layer had been formed, with a pressure-sensitive adhesive. Subsequently, the surface profile of the anti-glare layer was measured under the condition where a cutoff value was 0.8 mm using a high-precision microfigure measuring instrument (SURFCORDER ET4000 (trade name), produced by Kosaka Laboratory Ltd.), and the arithmetic average surface roughness Ra, the average convex-to-convex distance Sm, and the average tilt angle $\theta$a were then determined. The high-precision microfigure measuring instrument automatically calculated the arithmetic average surface roughness Ra and the average tilt angle $\theta a$. The arithmetic average surface roughness Ra and the average tilt angle $\theta a$ were based on JIS B 0601 (1994 version). The average convex-to-convex distance Sm was an average convex-to-convex distance (mm) on the surface, measured according to JIS B 0601 (1994 version).

(Evaluation of the presence or absence of anisotropy)

Anisotropy of surface asperities of the anti-glare film was evaluated according to the following criteria:
Evaluation criteria:

Presence: a value obtained by dividing the difference in Ra value between the MD direction and the TD direction by the bigger Ra value in the MD direction or the TD direction is 0.03 (3%) or more
Absence: a value obtained by dividing the difference in Ra value between the MD direction and the TD direction by the bigger Ra value in the MD direction or the TD direction is less than 0.03 (3%).

When an anti-glare film evaluated as "presence" according to the evaluation criteria is irradiated with light of a laser pointer, it can be observed that transmitted and scattered light has anisotropy by visual check as described below. Thus, the evaluation can be simply performed by visual check. That is, an image of the anti-glare film is projected on a white wall at a 5 m position from the anti-glare film by perpendicularly irradiating the anti-glare film with a laser at a 5 cm position from the anti-glare film using a laser pointer including a circular light source, and the shape of an image by the transmitted light is checked. When the shape is oval, the anti-glare film has anisotropic scattering, and it can be interpreted that flocculated bodies are formed in the longitudinal direction of the oval and the direction perpendicular thereof.

(Haze value)

A haze value was measured according to JIS K 7136 (2000 version) (haze (cloudiness) using a haze meter ("HM-150" (trade name), produced by Murakami Color Research Laboratory).

(Panel contrast evaluation)

A polarizing plate at a visible side of a liquid crystal cell removed from a liquid crystal television ("LC-32DX3" (trade name) produced by Sharp Corporation, with a size of 32 inch) was replaced with a commercially available polarizing plate having no anti-glare film ("NPF-TEG1465DU" (trade name) produced by Nitto Denko Corporation). A surface of the anti-glare film on which no anti-glare layer had been formed was attached to the replaced polarizing plate, with a pressure-sensitive adhesive. In a dark room, front luminances in black display and white display of the liquid crystal television were measured using a luminance colormeter ("BM-5" (trade name), produced by Topcon Technohouse Corporation). A contrast was determined from "the luminance in white display/the luminance in black display", and a decreasing ratio from a contrast in a condition where the anti-glare film was not attached was determined.
A panel contract was evaluated according to the following criteria:
Evaluation criteria:

A: decreasing ratio of less than 5%
B: decreasing ratio of 5% or more.

(Glare evaluation)

(1) A 185 $\mu$m-thickness polarizing plate was attached to a surface of the anti-glare film on which no anti-glare layer had been formed, which was then attached to a glass substrate.
(2) The glass substrate was placed on a black matrix pattern fixed on a light table, and glare was evaluated by visual check. As the black matrix pattern, black matrix patterns having definitions of 120 and 200 ppi were provided, the evaluation was performed for each of them:

Evaluation criteria:

A: almost no glare was observed
B: little glare was observed but does not cause practical problem
C: glare was observed.

(Anti-glare property evaluation (fluorescent lamp))

(1) A black acrylic plate (with a thickness of 2.0 mm, produced by Mitsubishi Rayon Co., Ltd.) was attached to a surface of the anti-glare film on which no anti-glare layer had been formed, with a pressure-sensitive adhesive. Thus, a sample having a back surface with no reflection was produced.
(2) In an office environment (about 1000 Lx) where displays are used in general, the sample was illuminated by a fluorescent lamp (three wavelength light source), and anti-glare properties of the sample produced above were evaluated by visual check according to the following criteria:

Evaluation criteria:

G: no reflected glare of an image of the outline of the fluorescent lamp remains
NG: reflected glare of an image of the outline of the fluorescent lamp slightly remains.

(Weight-average particle size of particles)

By the Coulter counting method, the weight average particle size of the particles was measured. Specifically, a particle size distribution measurement apparatus (COULTER MULTISIZER (trade name), produced by Beckman Coulter, Inc.) using a pore electrical resistance method was employed to measure electrical resistance of an electrolyte corresponding to the volume of the particles when the particles passed through the pores. Thus, the number and volume of particles were measured and then the weight average particle size was calculated.

(Thickness of anti-glare layer)

The overall thickness of an anti-glare film was measured using a microgauge type thickness gauge produced by Mitutoyo Corporation, and the thickness of an anti-glare layer was calculated by subtracting the thickness of a translucent base from the overall thickness.

(Flocculation state evaluation)

The distribution of the particles was observed from a direction perpendicular to the surface of the anti-glare film using an optical microscope ("MX61L" produced by Olympus Corporation) in the semitrasparent mode with a magnification of $\times 500$.

[Anti-glare film 1]

As a resin contained in an anti-glare layer-forming material, 80 parts by weight of an ultraviolet-curable urethane acrylate resin (produced by Nippon Synthetic Chemical Industry Co., Ltd., "UV1700B" (trade name), with a solid content of 100%) and 20 parts by weight of polyfunctional acrylate (produced by Osaka Organic Chemical Industry Ltd., "BISCOAT #300" (trade name), with a solid content of 100%) containing pentaerythritol triacrylate as a main component were provided. 2 parts by weight of crosslinked polymethylmethacrylate particles (produced by Sekisui Plastics Co., Ltd., "TECHPOLYMER" (trade name), with a weight-average particle size: 5 $\mu$m and a refractive index: 1.51) as particles, 0.4 parts by weight of synthesized smectite which is organoclay (produced by CO-OP Chemical Co. Ltd., "LUCENTITE SAN" (trade name)) as thixotropy-imparting agents, 3 parts by weight of a photoinitiator (produced by BASF, "IRGACURE 907" (trade name)), and 0.5 parts by weight of a leveling agent (produced by DIC Corporation, "PC4100" (trade name), with a solid content of 10%) were mixed relative to 100 parts by weight of the solid content of the resin. The organoclay was used after diluting it with toluene so as to have a solid content of 6%. This mixture thus obtained was diluted with a toluene/cyclopentanone (CPN) mixed solvent (with a weight ratio of 80/20) so as to have a solid concentration of 40 wt%, which was then subjected to ultrasonic dispersion using an ultrasonic disperser. Thus, an anti-glare layer-forming material (coating solution) was prepared.
As a translucent base, a transparent plastic film base (a triacetylcellulose film, produced by Fujifilm Corporation, "FUJITAC" (trade name), with a thickness: 60 $\mu$m and a refractive index: 1.49) was provided. The anti-glare layer-forming material (coating solution) was applied to one surface of the transparent plastic film base using a wire bar. Thus, a coating layer was formed. At that time, the transparent plastic film base was tilted as shown in FIG. 7A, and the surface slip velocity V of the coating layer was set to 0.127 $\times$ 10$^{-9}$ m/s for 5 seconds. For the sake of convenience of description, the direction in which the transparent plastic film base was tilted was "the MD (Machine Direction) direction of the anti-glare film" described below. In the case of an actual machine for producing an anti-glare film with a transfer of a long film by roll to roll, a film can be tilted in a direction in which the film is transferred, and thus, "the MD direction of the anti-glare film" coincides with the direction in which the film is transferred in the case of the actual device. The film direction orthogonal to this MD direction is "the TD (Transverse Direction) direction of the anti-glare film". Then, the coating layer was dried by heating it at 90°C for 2 minutes. Thereafter, the coating layer was subjected to a hardening treatment by irradiating it with ultraviolet at the amount of irradiation with a high-pressure mercury lamp of 300 mJ/cm$^2$. Thus, an anti-glare layer with a thickness of 7.5 $\mu$m was formed, and an anti-glare film 1 was obtained.

[Anti-glare film 2]

An anti-glare film 2 was obtained in the same manner as in production of the anti-glare film 1 except that the crosslinked polystyrene particles (produced by Soken Chemical & Engineering Co., Ltd., "SX500" (trade name), with a weight-average particle size: 5 $\mu$m and a refractive index: 1.59) were used as the particles. The thickness of the anti-glare layer was 7.5 $\mu$m.

[Anti-glare film 3]

As a resin contained in an anti-glare layer-forming material, an ultraviolet-curable urethane acrylate resin (produced by DIC Corporation, "UNIDIC 17-806" (trade name), with a solid content of 80%) was provided. 5 parts by weight of crosslinked polymethylmethacrylate particles (produced by Sekisui Plastics Co., Ltd., "TECHPOLYMER" (trade name), with a weight-average particle size: 3 $\mu$m and a refractive index: 1.52) as the particles were mixed relative to 100 parts by weight of the solid content of the resin. The thixotropy-imparting agents were not mixed. The mixture thus obtained was diluted with an isopropyl alcohol/CPN mixed solvent (with a weight ratio of 70/30) so as to have a solid concentration of 38 wt%. Thus, an anti-glare layer-forming material (coating solution) was prepared. Then, an anti-glare film 3 was obtained in the same manner as in production of the anti-glare film 1 except that the surface slip velocity V of the coating layer was set to 0.062 $\times$ 10$^{-9}$ m/s for 5 seconds. The thickness of the anti-glare layer was 4 $\mu$m.

[Anti-glare film 4]

As a resin contained in the anti-glare layer-forming material, an ultraviolet-curable urethane acrylate resin (produced by JSR Corporation, "OPSTAR Z7540" (trade name), with a solid content: 56 wt%, a solvent: butyl acetate/ methyl ethyl ketone (MEK) = 76/24) was provided. 6 parts by weight of crosslinked polymethylmethacrylate particles (produced by Sekisui Plastics Co., Ltd., "TECHPOLYMER" (trade name), with a weight-average particle size: 5 $\mu$m and a refractive index: 1.51) as the particles were mixed relative to 100 parts by weight of the solid content of the resin. The thixotropy-imparting agents were not mixed. The mixture thus obtained was diluted with a butylacetate/MEK mixed solvent (with a weight ratio 50/50) so as to have a solid concentration of 45 wt%. Thus, an anti-glare layer-forming material (coating solution) was prepared. Then, an anti-glare film 4 was obtained in the same manner as in production of the anti-glare film 1 except that the surface slip velocity V of the coating layer was set to 0.134 $\times$ 10$^{-9}$ m/s for 5 seconds. The thickness of the anti-glare layer was 8 $\mu$m.

Various characteristics of the anti-glare films 1 to 4 obtained as described above were measured or evaluated. The results of these are shown in Table 1 below.

[Table 1]

| | Anti-glare film 1 | | Anti-glare film 2 | | Anti-glare film 3 | | Anti-glare film 4 | |
|---|---|---|---|---|---|---|---|---|
| Particle (pts.wt.) | 2 | | 2 | | 5 | | 6 | |
| Thixotropic agent (pts.wt.) | 0.4 | | 0.4 | | — | | — | |
| Solid concentration (%) | 40 | | 40 | | 35 | | 50 | |
| Particle size D (μm) | 5 | | 5 | | 3 | | 5 | |
| Anti-glare layer thickness D (μm) | 7.5 | | 7.5 | | 4 | | 8 | |
| D/d | 0.67 | | 0.67 | | 0.75 | | 0.63 | |
| k (kg/m³) | 0.99 | | 0.99 | | 0.95 | | 1.05 | |
| a (m/s²) | 2.0 | | 2.0 | | 2.0 | | 2.0 | |
| h (× 10⁻⁶ m) | 18.75 | | 18.75 | | 11.43 | | 16.00 | |
| η (× 10⁻³ Pa·s) | 5.5 | | 5.5 | | 4.0 | | 4.0 | |
| V (× 10⁻⁹ m/s) | 0.127 | | 0.127 | | 0.062 | | 0.134 | |
| t (s) | 5 | | 5 | | 5 | | 5 | |
| S (× 10⁻⁹ m) | 0.633 | | 0.633 | | 0.310 | | 0.672 | |
| Evaluation direction | MD | TD | MD | TD | MD | TD | MD | TD |
| Surface profile — Ra (μm) | 0.093 | 0.081 | 0.083 | 0.075 | 0.126 | 0.127 | 0.081 | 0.080 |
| Surface profile — Sm (mm) | 0.223 | 0.215 | 0.270 | 0.265 | 0.223 | 0.223 | 0.064 | 0.061 |
| Surface profile — θa (°) | 0.286 | 0.274 | 0.234 | 0.230 | 0.836 | 0.837 | 0.810 | 0.790 |
| Anisotropy | Presence | | Presence | | Absence | | Absence | |
| Haze (%) | 1 | | 9 | | 2 | | 10 | |

18

As shown in Table 1, anisotropy was detected in the MD direction (film direction in which the transparent plastic film base was tilted after coating) and in the TD direction (film direction orthogonal to the MD direction) of each of the anti-glare films 1 and 2. The anti-glare films 1 and 2 included flocculated portions forming convex portions by flocculating particles on the surface thereof, and in the flocculated portions, the particles were present in the state of gathering in the TD direction (direction orthogonal to the MD direction) of the anti-glare film. In contrast, no anisotropy was detected in the MD direction and the TD direction of each of the anti-glare films 3 and 4.

(Example 1)

The anti-glare film 1 was placed on the visible side surface of the liquid crystal display panel so that the MD direction of the anti-glare film 1 was orthogonal to the longitudinal direction of the black matrix pattern of the liquid crystal display panel. The definition of the black matrix pattern of the liquid crystal display panel was 120 ppi.

(Example 2)

The anti-glare film 2 was placed on the visible side surface of the liquid crystal display panel so that the MD direction of the anti-glare film 2 was orthogonal to the longitudinal direction of the black matrix pattern of the liquid crystal display panel. The definition of the black matrix pattern of the liquid crystal display panel was 200 ppi.

(Comparative Example 1)

The anti-glare film 1 was placed on the visible side surface of the liquid crystal display panel so that the TD direction of the anti-glare film 1 was orthogonal to the longitudinal direction of the black matrix pattern of the liquid crystal display panel. The definition of the black matrix pattern of the liquid crystal display panel was 120 ppi.

(Comparative Example 2)

The anti-glare film 2 was placed on the visible side surface of the liquid crystal display panel so that the TD direction of the anti-glare film 2 was orthogonal to the longitudinal direction of the black matrix pattern of the liquid crystal display panel. The definition of the black matrix pattern of the liquid crystal display panel was 200 ppi.

(Comparative Example 3)

The anti-glare film 3 was placed on the visible side surface of the liquid crystal display panel so that the MD direction of the anti-glare film 3 was orthogonal to the longitudinal direction of the black matrix pattern of the liquid crystal display panel. The definition of the black matrix pattern of the liquid crystal display panel was 120 ppi.

(Comparative Example 4)

The anti-glare film 3 was placed on the visible side surface of the liquid crystal display panel so that the TD direction of the anti-glare film 3 was orthogonal to the longitudinal direction of the black matrix pattern of the liquid crystal display panel. The definition of the black matrix pattern of the liquid crystal display panel was 120 ppi.

(Comparative Example 5)

The anti-glare film 4 was placed on the visible side surface of the liquid crystal display panel so that the MD direction of the anti-glare film 4 was orthogonal to the longitudinal direction of the black matrix pattern of the liquid crystal display panel. The definition of the black matrix pattern of the liquid crystal display panel was 200 ppi.

(Comparative Example 6)

The anti-glare film 4 was placed on the visible side surface of the liquid crystal display panel so that the TD direction of the anti-glare film 4 was orthogonal to the longitudinal direction of the black matrix pattern of the liquid crystal display panel. The definition of the black matrix pattern of the liquid crystal display panel was 200 ppi.

Various characteristics of image displays of Examples 1 to 2 and Comparative Examples 1 to 6 obtained as described above were determined or evaluated. The results of these are shown in Table 2 below.

[Table 2]

| | Anti-glare film | Placement direction * | Contrast | Glare (definition) | Anti-glare properties |
|---|---|---|---|---|---|
| Ex. 1 | Anti-glare film 1 | MD | A | A (120 ppi) | G |
| Ex. 2 | Anti-glare film 2 | MD | B | A (200 ppi) | G |
| Comp. Ex. 1 | Anti-glare film 1 | TD | A | B (120 ppi) | G |
| Comp. Ex. 2 | Anti-glare film 2 | TD | B | B (200 ppi) | G |
| Comp. Ex. 3 | Anti-glare film 3 | MD | A | B (120 ppi) | G |
| Comp. Ex. 4 | Anti-glare film 3 | TD | A | B (120 ppi) | G |
| Comp. Ex. 5 | Anti-glare film 4 | MD | B | A (200 ppi) | NG |
| Comp. Ex. 6 | Anti-glare film 4 | TD | B | A (200 ppi) | NG |
| * The placement direction is orthogonal to the longitudinal direction of the black matrix pattern | | | | | |

As shown in Table 2, the results of the glare evaluation and anti-glare property evaluation were favorable in the image displays of Examples 1 and 2 in which an anti-glare film was placed so that one direction in which the particles were gathered coincided with the longitudinal direction of the black matrix pattern. In Example 1 using the anti-glare film 1, the haze value of the anti-glare film 1 was 1% which was low, so that the contrast was favorable, and the glare also was favorably prevented from occurring by placing the anti-glare film in the above-described direction. In Example 2 using the anti-glare film 2, the haze value of the anti-glare film 2 was 9% which was high, so that the contract was slightly deteriorated, and the glare, however, was favorably prevented from occurring, and thus, the anti-glare film 2 is applicable to a high-definition panel. In contrast, the glare was unfavorable in Comparative Examples 1 and 2 in which an anti-glare film was placed so that one direction in which the particles were gathered does not coincide with the longitudinal direction of the black matrix pattern. Further, in Comparative Examples 3 and 4 using the anti-glare film 3 with "absence" of anisotropy, the glare was unfavorable regardless of the placement direction of the anti-glare film. When the anti-glare film had no anisotropy, there was no change in result of the glare evaluation even though the placement direction was changed. Furthermore, in Comparative Examples 5 and 6 using the anti-glare film 4 with "absence" of anisotropy, the glare was favorable, but anti-glare properties were impaired. The anti-glare film 4 was designed so that Sm became small in order to prevent glare. Therefore, the particles are not present in the state of gathering in one direction in in-plane direction of the anti-glare layer. Thus, anti-glare properties were not ensured.

The image display according to the present invention can achieve both of having anti-glare properties and preventing glare which are contradictory objectives. Thus, the image display according to the present invention is applicable in wide range of uses and fields such as various uses placing importance on visibility, for example. Moreover, the anti-glare film according to the present invention can be suitably used in optical elements such as polarizing plates, liquid crystal panels, and image displays such as LCDs (liquid crystal displays) and OLEDs (organic EL displays), for example. The use of the anti-glare film is not limited, and the anti-glare film is applicable in a wild range of fields.

REFERENCE CHARACTERS LIST

| | |
|---|---|
| 1 to 6, 12 | particles |
| 10 | anti-glare film |
| 11 | anti-glare layer |
| 13 | thixotropy-imparting agent |
| 14 | convex portion (flocculated portion) |
| 15 | black matrix pattern |
| 20 | translucent base |
| 21 | coating layer |
| 22 | coating solution |
| 100 | double-dashed chain line |

**Claims**

1. An image display comprising:

   an anti-glare film (10) at a visible side surface; and
   a black matrix pattern (15), wherein
   the anti-glare film comprises: a translucent base (20); and an anti-glare layer (11) being laminated on at least one surface of the translucent base,
   the anti-glare layer (11) is formed of an anti-glare layer-forming material comprising a resin and fillers (12, 13),
   the anti-glare layer (11) comprises a flocculated portion (14) forming a convex portion on a surface of the anti-glare layer by flocculation of the fillers,
   in the flocculated portion, the fillers are present in the state of being gathered in one direction in an in-plane direction of the anti-glare layer (11), and
   the anti-glare film (10) is placed so that the one direction in which the fillers are gathered coincides with a longitudinal direction of the black matrix pattern (15).

2. The image display according to claim 1, wherein the fillers comprise at least one selected from particles (12) and thixotropy-imparting agents (13).

3. The image display according to claim 2, wherein the thixotropy-imparting agents (13) are at least one selected from the group consisting of organoclay, oxidized polyolefin, and denatured urea.

4. The image display according to claim 2 or 3, wherein the anti-glare layer (11) contains 0.2 to 5 parts by weight of the thixotropy-imparting agents (13) with respect to 100 parts by weight of the resin.

5. The image display according to any one of claims 2 to 4, wherein the anti-glare layer (11) contains 0.2 to 12 parts by weight of the particles (12) with respect to 100 parts by weight of the resin.

6. An anti-glare film (10) comprising:

   a translucent base (20); and
   an anti-glare layer (11) being laminated on at least one surface of the translucent base (20), wherein
   the anti-glare layer (11) is formed of an anti-glare layer-forming material comprising a resin and fillers (12, 13),
   the anti-glare layer (11) comprises a flocculated portion (14) forming a convex portion on a surface of the anti-glare layer by flocculation of the fillers, and
   in the flocculated portion (14), the fillers (12, 13) are present in the state of being gathered in one direction in an in-plane direction of the anti-glare layer (11).

7. The anti-glare film according to claim 6 for use in the image display according to any one of claims 1 to 5.

8. A method for producing the anti-glare film (10) according to claim 6 or 7, comprising the steps of:

   coating the anti-glare layer-forming material on at least one surface of the translucent base (20) to form a coating layer (21) of the anti-glare layer-forming material; and
   curing the coating layer to form an anti-glare layer (11), the anti-glare layer comprises a flocculated portion (14) forming a convex portion on a surface of the anti-glare layer by flocculation of the fillers (12, 13), and in the flocculated portion, the fillers are present in the state of being gathered in one direction in an in-plane direction of the anti-glare layer, wherein
   a surface profile of the anti-glare film (11) is adjusted by adjusting a shear distance S of the coating layer (21), defined by the following equation (I):

$$S = \int V dt \qquad (I)$$

where in the equation (I)

   S: shear distance (m)

V: shear velocity (m/s)
t: shear holding time (s), and

the shear velocity V is defined by the following equation (II):

$$V = kah^2/\eta \qquad (II)$$

where in the equation (II)

k: specific gravity of coating layer ($kg/m^3$)
a: acceleration ($m/s^2$)
h: thickness of coating layer (m)
$\eta$: viscosity of coating layer (Pa•s)

provided that the acceleration a may change over time or may be constant.

9. The method according to claim 8, wherein the shear distance S is set in the range from $0.005 \times 10^{-9}$ to $120 \times 10^{-9}$ m.

10. The method according to claim 8 or 9, wherein the shear velocity V is set in the range from $0.05 \times 10^{-9}$ to $2.0 \times 10^{-9}$ m/s.

11. The method according to any one of claims 8 to 10, wherein the shear holding time is set in the range from 0.1 to 60 s.

12. The method according to any one of claims 8 to 11, wherein a surface profile of the anti-glare film (10) is adjusted by adjusting the number of parts by weight of the particles (12) with respect to 100 parts by weight of the resin in the anti-glare layer-forming material.

FIG. 1A

FIG. 1B

FIG. 2

FIG. 3

FIG. 4

EP 2 696 224 A2

FIG. 5A

12

FIG. 5B

(a)

1  2  3  4  5  6

Coating layer

Translucent base

(b)

1  2  3  4  5  6

Anti-glare layer

Permeable layer

Translucent base

FIG. 6

FIG. 7A

FIG. 7B

A(m²)

Velocity V(m/s)

h(m)

Fluid

Fixed plate

FIG. 8

FIG. 9

Ti value

1.0    1.3 <    2.0    < 3.5

No addition

Thixotropic agent distribution state (assumption)

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009109683 A
- JP 2003202416 A
- JP 2008090263 A
- JP 2008088309 A